# EUROPEAN PATENT SPECIFICATION

(11) **EP 0 885 112 B1**
(45) Date of publication and mention of the grant of the patent: **04.04.2001**
(21) Application number: 96926024.9
(22) Date of filing: 12.08.1996
(51) Int. Cl.: B29C 63/00, G11B 23/50

(54) **METHOD AND SYSTEM FOR PROCESSING DATA CARRIERS**
VERFAHREN UND ANLAGE ZUR BEARBEITUNG VON DATENTRÄGERN
PROCEDE ET SYSTEME PERMETTANT DE TRAITER DES SUPPORTS D'INFORMATION

(30) Priority: 10.08.1995 NL 1000959
(43) Date of publication of application: 23.12.1998
(73) Proprietor: AVP Europe B.V., 6136 KN Sittard (NL)
(72) Inventor: HUEBER, Gerardus, Aloisius, Anna, Antonius, B-3630 Maasmechelen (BE)
(74) Representative: Bartelds, Erik
(86) International application number: NL9600320
(87) International publication number: WO9706000

(56) References cited:
- DE-A- 3 511 711
- DE-A- 4 123 199
- US-A- 5 220 754
- US-A- 5 320 515

## Description

The present invention relates to a method for processing data carriers. Data carriers such as optical disks (CDs or CD-ROMs), optomagnetic disks, magnetic disks (.diskettes) and magnetic tape carriers (audio or video cassettes) generally comprise a carrier manufactured from plastic to which is applied a layer which contains the actual data and which will generally contain metal and/or metal oxide. The carrier is therein often arranged in a protective sleeve, which sleeve is likewise usually manufactured from plastic. As a result of this assembly data carriers cannot simply be thrown away when they are discarded but it is important to process them and preferably make the materials used therein suitable for re-use.

An additional problem which occurs herein is that certain rights attach to some categories of discarded data carriers which would be lost with processing of the data carriers. Payments are often made for these rights which are then reclaimed when the data carriers are i processed. This is particularly the case when unsold data carriers, for instance CDs for which copyright payments have already been made to artists, are destroyed and made suitable for re-use. In such a situation undue copyright payments have in fact been made and these are therefore repaid by a copyright organisation such as Buma/Stemra.

In order to solve the above problem, the document US-A-5 320 515 discloses a method and an apparatus for defacing compact discs to render them unplayable.

A watertight monitoring of the destruction of the data carriers is of great importance here in order to prevent data carriers for which the copyright payments have been repaid from still being commercially traded. This is particularly a problem because such data carriers - as their name indicates - are often relatively compact and represent a high commercial value so that misappropriation thereof may seem comparatively simple and attractive.

The invention now has for its object to provide a method for processing data carriers which makes possible a watertight monitoring of the destruction of said data carriers. According to the invention this is achieved with a method which comprises the steps of:
a) supplying a batch of data carriers for processing,
b) defacing the supplied data carriers, and
c) further processing the defaced data carriers, wherein during each step the quantity of data carriers of the batch is compared with a given quantity and a warning signal is generated if the thus determined quantity and the given quantity do not correspond.

Checking at each step in the processing process whether the given quantity of data carriers is indeed present can prevent a proportion of the data carriers from still being brought into commercial circulation.

When large quantities of data carriers have to be processed the data carriers can be stored temporarily prior to defacing thereof.

As a further check the defaced data carriers can be weighed.

In addition to the quantity of each batch, the type of data carriers is preferably also given and at each step not only the quantity but also the type of data carrier is compared with the given type. An extra verification is obtained in this manner that the intended data carriers are actually destroyed.

The given quantity and type of data carriers can therein be stored in a data file and the data file and the batch of data carriers can be mutually linked by assigning a code. The data carriers can thus be followed step by step as they progress through the entire destruction process. It is advantageous therein to secure the data file against manipulation.

The data carriers can be defaced by deforming them, preferably by reducing them in size. They can also be defaced by removing a layer therefrom which carries the data.

The present invention further relates to a system for embodying the above described method. According to the invention such a system is provided with at least one station for supplying data carriers, at least one station placed in series therewith for defacing the supplied data carriers and stations for further processing of the defaced data carriers placed in series with the at least one defacing station, wherein at least the supply station and the defacing station are provided with means for determining a quantity of data carriers passing through the station, which quantity-determining means are connected to a control system.

Preferred embodiments of the system according to the invention are described in the dependent claims 11 to 17.

The invention will now be elucidated on the basis of an example, wherein reference is made to the annexed drawing, in which:
Fig. 1 shows a flow diagram of the method according to the invention; and
Fig. 2 shows in more detail an alternative for the framed part II of the flow diagram of fig. 1.

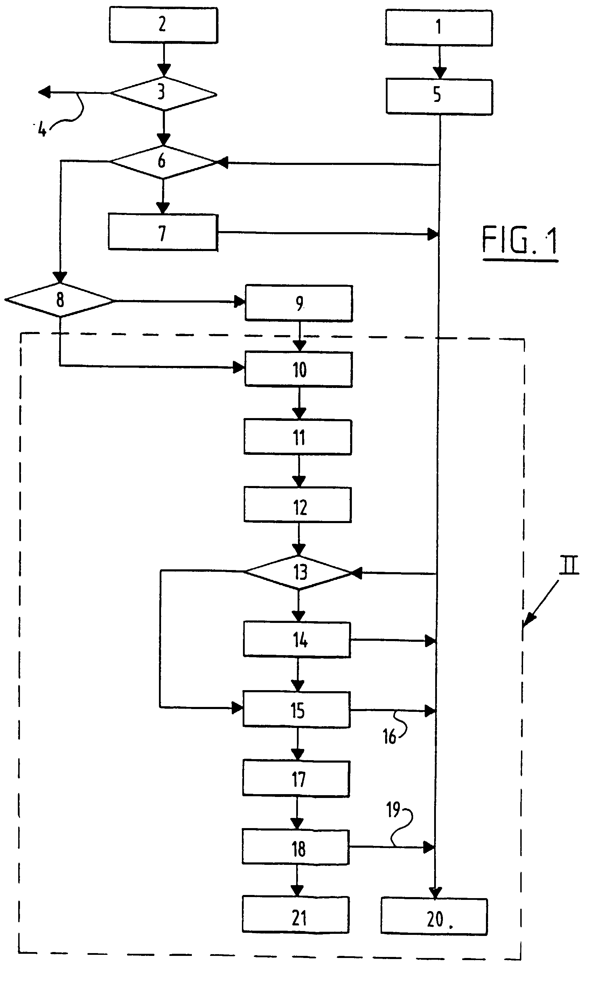

A method for processing data carriers, more particularly CDs for which copyright payments have been made but which have not been sold, comprises the following steps. As a result of receiving a processing order which is confirmed to the customer (block 1, fig. 1), a data file is first created (block 5) in which is included the type and the quantity of data carriers to be supplied. The type of data carriers is indicated therein in the form of so-called release numbers allocated to the data carriers by a recording company. The data file is provided with a unique code which is only issued once, consisting for example of the year, the month, the day, the customer and a consecutive serial number. This code is also assigned to the associated batch of data carriers for processing on receipt thereof.

The given batch of data carriers is then actually supplied (block 2). It is first ascertained herein whether the batch has arrived undamaged (block 3). If this is not the case the batch is refused, and returned to the customer (arrow 4). On the basis of the data file is then determined whether the supplied batch of data carriers corresponds with the order (block 6) in respect of type and number. A batch will herein generally consist of a plurality of pallets, on each of which is present a plurality of types of data carriers (with different release numbers). Each pallet is provided with a chit on which the load is stated. These chits are compared with the created data file. Should discrepancies be found between the data file created on the basis of the supplied processing order and the actually supplied collection of data carriers, the customer is notified and in consultation with the customer the data file is adjusted to the actually supplied batch (block 7). The data file is then protected against manipulation, for instance by encoding it or by printing it on a special paper which cannot be copied. When no agreement can be reached with the customer concerning the content of the actually supplied batch, this is then returned. With a view to the costs, this should of course be avoided as far as possible.

If the supplied data carriers correspond with the data file, they can in principle be processed. When this is found to be necessary in respect of the capacity of the processing installation (block 8), the supplied data carriers can first be placed in interim storage in a storage area (block 9). Each pallet of the batch is herein placed at a predetermined location. When processing capacity becomes available again, one pallet at a time is taken out of the storage area for further processing. Removal of the pallets from the storage area is centrally registered.

The pallet taken out of the storage area is then transported (block 10) to a station where the data carriers present thereon will be defaced. The pallet is there unloaded (block 11), whereafter the data carriers are sorted by release number (block 12). A check is then made with reference to the associated data file as to whether all the given data carriers are actually present (block 13). If not, a warning is then given in the form of an addition to the data file (which per se can no longer be adapted), wherein the actual content of the pallet is specified (block 14). When all the data carriers which according to the data file must be destroyed have actually reached the station, they are counted (block 15) and defaced (block 17). This can for instance take place by deforming the data carriers, for example by breaking them. The result of the count is added to the data file as annex (arrow 16). The actual number of counted data carriers can herein vary from the given number, for example when not all the supplied packagings are found to be actually filled.

As a further check, the remnants of the defaced data carriers are then weighed (block 18), whereafter the data carriers are transported for further processing to other stations (block 21). The result of the weighing is likewise added to the data file (arrow 19), whereafter a processing report can finally be drawn up (block 20). The recorded weight can otherwise be used for instance by an accountant during interim checks in order to determine whether all the data carriers of a particular batch are still to be found in the processing cycle.

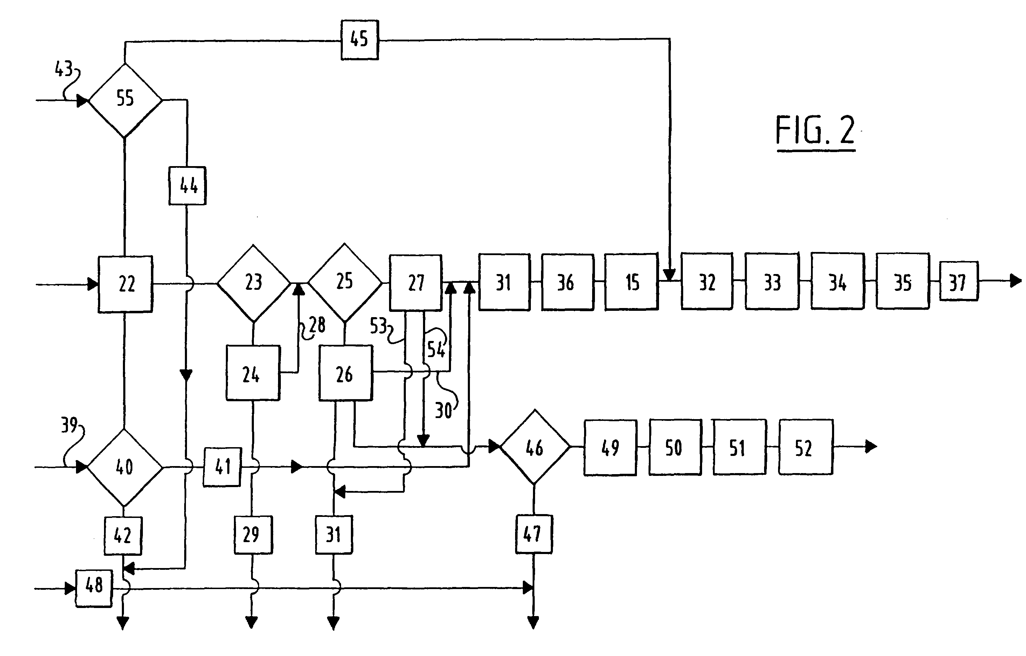

The operations to be performed to deface the data carriers are shown in more detail in fig. 2. After being taken out of the storage area and being checked as to the correctness of quantity and type, the data carriers are fed into station 22. A check is then made in station 23 as to whether they are wrapped in foil. If this is the case the foil is removed in station 24. This foil is weighed in station 29 and subsequently discharged in order to be made suitable for re-use.

The packaged data carriers are then carried as according to arrow 28 to station 25 where a check is made as to whether the packaging is a standard packaging. If this is not the case the packaging is manually opened in station 26 and the data carrier removed therefrom. Paper, such as booklets with song lyrics, which may be present in the packaging is herein removed as according to arrow 31, weighed in station 31 and made suitable for re-use, while the empty packaging is transported as according to arrow 32 to a further processing line. The unpacked data carriers 30 are carried back to the main processing line. If the data carriers were arranged in a standard packaging this is opened by an unpacking device and the data carriers removed therefrom. Paper possibly present in the packaging is in this case also discharged as according to arrow 53 for weighing and re-use, while the packaging itself is transported as according to arrow 54 to a subsequent processing line.

The unpacked data carriers are placed on a spindle in station 31 whereafter they are counted in station 36 and then actually defaced in station 15. Use can be made for this purpose of any known destruction apparatus, such as for instance a simple cutting blade. It is also possible to make use of an apparatus with which only a layer containing the data is removed (on a CD the aluminium layer and protective lacquer coating). Such an apparatus is described for instance in the German patents 4123199 and 4205390. After being counted and weighed the fragments or carriers stripped of their data layer are guided to the further processing stations which are collectively designated with the reference numeral 21. There the defaced data carriers are washed in station 32, ground in station 33, extruded in station 34 and granulated in station 35, this as described in the two above mentioned publications and the German patent 3511711. The thus obtained granulate can be weighed (station 37) to then serve as raw material for new data carriers.

After defacing of the data carriers an optional check can be made as to whether or not they are contaminated. When the data carriers are clean they can be processed as stated above. Conversely, contaminated data carriers are discharged as waste to a specialized processing company.

In order to enable economic use of the processing line it is suitable not only for processing data carriers on which copyright rests, but also for instance for data carriers which have been rejected during the production thereof through not meeting quality requirements, as well as other waste released during production such as gates and so-called blanks. The reject CDs enter the processing treatment as according to arrow 39 whereafter it is determined in station 40 whether these are contaminated or not. Uncontaminated reject data carriers are carried into the main destruction line after being weighed in station 41, while contaminated reject CDs are weighed in station 42 and then carried to the specialized processor. The other residual products (gates and blanks) released during production of data carriers are supplied as according to arrow 43, whereafter it is determined in station 55 whether or not these remnants are contaminated. If they are contaminated they are weighed in station 44 and then transported to the specialized processor, while uncontaminated remnants are weighed in station 45 and subsequently transported directly to the final processing 21 since they do not of course have to be defaced or reduced in size. Neither are these products counted, they are only weighed.

The packagings (arrows 32,54) becoming available when the data carriers are unpacked are checked for reuseability in station 46. If it is determined that the packagings can no longer be re-used, they are weighed (station 47) and transported to a line for processing the polystyrene from which such packagings are generally manufactured. Packagings which have already been rejected during the production process are also weighed in station 48 and then guided to the polystyrene processing. The thus recovered polystyrene is used again for the production of new packagings. Packagings which are determined to be still useable are taped together in station 49, loaded onto pallets in station 50 and wrapped in stretch foil in station 51, whereafter the pallets are counted in station 52 and are then suitable for delivery.

When a pallet with data carriers has progressed through the whole processing cycle without irregularities, a destruction protocol is formulated therefor. When the destruction protocol is present for all the pallets of a batch the data file is closed and the customer receives a certificate of destruction of the data carriers recognized by the most important copyright organisations. On the basis of this destruction certificate, wherein the number of destroyed data carriers for each release number is stated in addition to the weight of the total batch destroyed, the copyright organisations accept that the refund of excess copyright payments (in the case of destruction of unsold CDs) has taken place correctly.

The various steps of the method according to the invention can be performed either manually or mechanically. When the processing takes place mechanically the various processing stations together form a processing line which can be controlled by a specially programmed control computer. The data file is therein sent from station to station where the batch is checked at each station by a responsible operator with reference to this data file. The various stations can herein be placed in lockable and secured areas. Access to these areas can herein also be monitored and recorded in order to be able to determine who has been present in a particular area at a given time. This further minimizes the chance of misappropriation of data carriers during the processing treatment.

Data carriers on which copyright rests and for which repayments have meanwhile been made can be destroyed with the above described method in a simple, cost-effective manner which can be monitored very well. In the same processing line in which the copyright-protected data carriers are destroyed, other data carriers, for example old data carriers or waste products from manufacturing lines, can also be destroyed and further processed. Fewer checks are of course required therein as to number and type of processed data carriers. The data files necessary for the destruction of copyright-protected data carriers can also be created for these waste products in order to serve as a basis for invoicing for the destruction operations.

## Claims

1. Method for processing data carriers, comprising the steps of:
a) supplying a batch of data carriers for processing,
b) defacing the supplied data carriers, and
c) further processing the defaced data carriers, wherein during each step the quantity of data carriers of the batch is compared with a given quantity and a warning signal is generated if the thus determined quantity and the given quantity do not correspond.

2. Method as claimed in claim 1, **characterized in that** the data carriers are temporarily stored before defacing thereof.

3. Method as claimed in claim 1 or 2, **characterized in that** the defaced data carriers are weighed.

4. Method as claimed in any of the foregoing claims, **characterized in that** in addition to the quantity of each batch, the type of data carriers is also given and at each step not only the quantity but also the type of data carrier is compared with the given type.

5. Method as claimed in claim 4, **characterized in that** the given quantity and type of the data carriers are stored in a database and the data file and the batch of data carriers can be mutually linked by assigning a code.

6. Method as claimed in claim 5, **characterized in that** the data file is protected against manipulation.

7. Method as claimed in any of the foregoing claims, **characterized in that** the data carriers are defaced by deforming thereof.

8. Method as claimed in claim 7, **characterized in that** the data carriers are reduced in size.

9. Method as claimed in any of the claims 1-6, **characterized in that** the data carriers are defaced by removing therefrom a layer carrying the data.

10. System for performing the method as claimed in any of the foregoing claims, provided with at least one station for supplying data carriers, at least one station placed in series therewith for defacing the supplied data carriers and stations for further processing of the defaced data carriers placed in series with the at least one defacing station, wherein at least the supply station and the defacing station are provided with means for determining a quantity of data carriers passing through the station, which quantity-determining means are connected to a control system.

11. System as claimed in claim 10, **characterized by** at least one area placed between the supply station and the defacing station for temporarily storing the supplied data carriers.

12. System as claimed in claims 10 or 11, **characterized in that** between the defacing station and the further processing stations are arranged means connected to the control system for weighing the total quantity of defaced data carriers.

13. System as claimed in claim 10 or 11, **characterized in that** the supply station has means connected to the control system for inputting data relating to the type of data carriers supplied, and the defacing station has means connected to the control system for reading the type of defaced data carriers.

14. System as claimed in claim 11 or 12, **characterized in that** the control system has means connected to the input means and the quantity-determining means for creating a data file associated with a group of data carriers, and is adapted to send this data file to the defacing station and/or the storage area.

15. System as claimed in any of the claims 11-13, **characterized in that** the defacing station has means for deforming the data carriers.

16. System as claimed in claim 14, **characterized in that** the deforming means are adapted to reduce the data carriers in size.

17. System as claimed in any of the claims 11-13, **characterized in that** the defacing station has means for removing from the data carriers a layer carrying the data.

18. System as claimed in any of the claims 10-16, **characterized in that** the stations are each arranged in an area which is lockable and is provided with a security system.

## Patentansprüche

1. Verfahren zum Verarbeiten von Datenträgern, mit den Schritten:
a) Liefern eines Stapels von Datenträgern zum Verarbeiten,
b) Ungültigmachen der gelieferten Datenträger und
c) weiteres Verarbeiten der ungültig gemachten Datenträger, worin während jedes Schrittes die Menge der Datenträger des Stapels mit einer gegebenen Menge verglichen wird und ein Warnsignal erzeugt wird, wenn die so bestimmte Menge und die gegebene Menge nicht übereinstimmen.

2. Verfahren nach Anspruch 1, dadurch gekennzeichnet, daß die Datenträger zeitweilig gespeichert werden, bevor sie ungültig gemacht werden.

3. Verfahren nach Anspruch 1 oder 2, dadurch gekennzeichnet, daß die ungültig gemachten Datenträger gewogen werden.

4. Verfahren nach einem der vorhergehenden Ansprüche, dadurch gekennzeichnet, daß zusätzlich zu der Menge eines jeden Stapels der Typ der Datenträger ebenfalls gegeben wird und in jedem Schritt nicht nur die Menge sondern auch der Typ des Datenträgers mit dem gegebenen Typ verglichen wird.

5. Verfahren nach Anspruch 4, dadurch gekennzeichnet, daß die gegebene Menge und der gegebene Typ der Datenträger in einer Datenbank gespeichert werden, und die Datendatei und der Stapel der Datenträger durch Zuordnen eines Codes gegenseitig verknüpft werden.

6. Verfahren nach Anspruch 5, dadurch gekennzeichnet, daß die Datendatei gegen Manipulation geschützt wird.

7. Verfahren nach einem der vorhergehenden Ansprüche, dadurch gekennzeichnet, daß die Datenträger durch Verformen davon ungültig gemacht werden.

8. Verfahren nach Anspruch 7, dadurch gekennzeichnet, daß die Datenträger in der Größe verringert werden.

9. Verfahren nach einem der Ansprüche 1 bis 6, dadurch gekennzeichnet, daß die Datenträger durch Entfernen davon einer Schicht, die die Daten trägt, ungültig gemacht werden.

10. System zum Ausführen des Verfahrens, wie es in einem der vorhergehenden Ansprüche beansprucht ist, mit mindestens einer Station zum Liefern von Datenträgern, mindestens einer Station, die in Reihe damit gestellt ist, zum Ungültigmachen der gelieferten Datenträger und Stationen zum weiteren Verarbeiten der ungültig gemachten Datenträger, die in Reihe mit der mindestens einen Ungültigmachungsstation gestellt sind, worin mindestens die Lieferstation und die Ungültigmachungsstation mit Mitteln zum Bestimmen einer Menge von Datenträgern versehen sind, die durch die Station gehen, wobei die Mengenbestimmungsmittel mit einem Steuersystem verbunden sind.

11. System nach Anspruch 10, gekennzeichnet durch mindestens ein Gebiet, das zwischen der Lieferstation und der Ungültigmachungsstation angeordnet ist, zum zeitweiligen Speichern der gelieferten Datenträger.

12. System nach Anspruch 10 oder 11, dadurch gekennzeichnet, daß zwischen der Ungültigmachungsstation und den weiteren Verarbeitungsstationen Mittel angeordnet sind, die mit dem Steuersystem verbunden sind, zum Wiegen der Gesamtmenge der ungültig gemachten Datenträger.

13. System nach Anspruch 10 oder 11, dadurch gekennzeichnet, daß die Lieferstation Mittel aufweist, die mit dem Steuersystem verbunden sind, zum Eingeben von Daten, die sich auf den Typ der gelieferten Datenträger beziehen, und die Ungültigmachungsstation Mittel aufweist, die mit dem Steuersystem verbunden sind, zum Lesen des Types der ungültig gemachten Datenträger.

14. System nach Anspruch 11 oder 12, dadurch gekennzeichnet, daß das Steuersystem Mittel aufweist, die mit dem Eingabemittel und dem Mengenbestimmungsmittel verbunden sind, zum Erzeugen einer Datendatei, die mit einer Gruppe von Datenträgern verknüpft ist, und ausgelegt ist zum Senden dieser Datendatei an die Ungültigmachungsstation und/oder das Speichergebiet.

15. System nach einem der Ansprüche 11 bis 13, dadurch gekennzeichnet, daß die Ungültigmachungsstation Mittel zum Verformen der Datenträger aufweist.

16. System nach Anspruch 14, dadurch gekennzeichnet, daß die Verformungsmittel ausgelegt sind zum Verringern der Datenträger in der Größe.

17. System nach einem der Ansprüche 11 bis 13, dadurch gekennzeichnet, daß die Ungültigmachungsstation Mittel zum Entfernen einer Schicht, die die Daten trägt, von den Datenträgern aufweist.

18. System nach einem der Ansprüche 1 bis 16, dadurch gekennzeichnet, daß die Stationen jeweils in einem Gebiet angeordnet sind, das verschließbar ist und mit einem Sicherheitssystem versehen ist.

## Revendications

1. Procédé de traitement de supports de données, comprenant les étapes consistant à :
a) approvisionner un lot de supports de données à traiter,
b) effacer les supports de données approvisionnés, et
c) appliquer un traitement supplémentaire aux supports de données effacés, dans lequel, à chaque étape, la quantité de supports de données du lot est comparée à une quantité donnée et un signal d'avertissement est généré si la quantité ainsi déterminée et la quantité donnée ne correspondent pas.

2. Procédé selon la revendication 1, caractérisé en ce que les supports de données sont stockés temporairement avant d'être déformés.

3. Procédé selon la revendication 1 ou 2, caractérisé en ce que les supports de données effacés sont pesés.

4. Procédé selon l'une quelconque des revendications précédentes, caractérisé en ce qu'en plus de la quantité de chaque lot, le type de supports de données est donné également et à chaque étape, non seulement la quantité mais aussi le type de support de données est comparé au type donné.

5. Procédé selon la revendication 4, caractérisé en ce que la quantité et le type donnés des supports de données sont stockés dans une base de données et le fichier de données et le lot de supports de données peuvent être reliés mutuellement par l'affectation d'un code.

6. Procédé selon la revendication 5, caractérisé en ce que le fichier de données est protégé contre la manipulation.

7. Procédé selon l'une quelconque des revendications précédentes, caractérisé en ce que les supports de données sont effacés par déformation.

8. Procédé selon la revendication 7, caractérisé en ce que les supports de données subissent une réduction de format.

9. Procédé selon l'une quelconque des revendications 1 à 6, caractérisé en ce que les supports de données sont effacés en supprimant de ceux-ci une couche supportant les données.

10. Système pour effectuer le procédé selon l'une quelconque des revendications précédentes, muni d'au moins une station pour fournir des supports de données, d'au moins une station placée en série avec celle-ci pour effacer les supports de données approvisionnés et de stations pour un traitement supplémentaire des supports de données effacés placées en série avec ladite au moins une station d'effacement, dans lequel au moins la station d'approvisionnement et la station d'effacement sont prévues avec des moyens pour déterminer une quantité de supports de données traversant la station, ces moyens de détermination de quantité étant connectés à un système de commande.

11. Système selon la revendication 10, caractérisé par au moins une zone placée entre la station d'approvisionnement et la station d'effacement pour stocker temporairement les supports de données approvisionnés.

12. Système selon la revendication 10 ou 11, caractérisé en ce qu'entre la station d'effacement et les stations de traitement supplémentaire sont disposés des moyens connectés au système de commande pour peser la quantité totale des supports de données effacés.

13. Système selon la revendication 10 ou 11, caractérisé en ce que la station d'approvisionnement dispose de moyens connectés au système de commande pour entrer des données concernant le type de supports de données approvisionnés, et la station d'effacement dispose de moyens connectés au système de commande pour lire le type de supports de données effacés.

14. Système selon la revendication 11 ou 12, caractérisé en ce que le système de commande dispose de moyens connectés aux moyens d'entrée et aux moyens de détermination de quantité pour créer un fichier de données associé à un groupe de supports de données, et est adapté pour envoyer ce fichier de données à la station d'effacement et/ou la zone de stockage.

15. Système selon l'une quelconque des revendications 11 à 13, caractérisé en ce que la station d'effacement dispose de moyens pour déformer les supports de données.

16. Système selon la revendication 14, caractérisé en ce que les moyens de déformation sont adaptés pour réduire le format des supports de données.

17. Système selon l'une quelconque des revendications 11 à 13, caractérisé en ce que la station d'effacement dispose de moyens pour supprimer des supports de données une couche supportant les données.

18. Système selon l'une quelconque des revendications 10-16, caractérisé en ce que les stations sont chacune disposées dans une zone qui est verrouillable et est prévue avec un système de sécurité.
